(19) 

Europäisches Patentamt

European Patent Office

Office européen des brevets

(11) **EP 3 165 910 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(51) Int Cl.:
***G01N 25/18*** *(2006.01)*

(21) Anmeldenummer: **16002275.2**

(22) Anmeldetag: **25.10.2016**

(54) **VERFAHREN UND VORRICHTUNG ZUR PHOTOTHERMISCHEN UNTERSUCHUNG EINER PROBE**

METHOD AND DEVICE FOR THE PHOTOTHERMAL ANALYSIS OF A SAMPLE

PROCÉDÉ ET DISPOSITIF D'EXAMEN PHOTOTHERMIQUE D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2015 DE 102015118856**

(43) Veröffentlichungstag der Anmeldung:
**10.05.2017 Patentblatt 2017/19**

(73) Patentinhaber: **Netzsch Gerätebau GmbH 95100 Selb (DE)**

(72) Erfinder:
- **Brunner, Martin
  95176 Konradsreuth (DE)**
- **Thermitus, Marc-Antoine
  Hollis, NH 03049 (US)**

(56) Entgegenhaltungen:
**DE-A1-102012 106 955    US-A1- 2006 039 443**

- **H Mehling ET AL: "Thermal Diffusivity of Semitransparent Materials Determined by the Laser-Flash Method Applying a New Analytical Model1", International Journal of Thermophysics, 1. Januar 1998 (1998-01-01), XP055355773, Gefunden im Internet: URL:http://download.springer.com/static/pd f/438/art%3A10.1023%2FA%3A1022611527321.p d f?originUrl=http://link.springer.com/artic le/10.1023/A:1022611527321&token2=exp=1489 654072~acl=/static/pdf/438/art%253A10.1023 %252FA%253A1022611527321.pdf?originUrl=ht t p%3A%2F%2Flink.springer.com%2Farticle%2F1 0 .1023%2FA% [gefunden am 2017-03-16]**
- **AGUSTÍN SALAZAR ET AL: "Extending the flash method to measure the thermal diffusivity of semitransparent solids", MEASUREMENT SCIENCE AND TECHNOLOGY, IOP, BRISTOL, GB, Bd. 25, Nr. 3, 17. Februar 2014 (2014-02-17), Seite 35604, XP020258194, ISSN: 0957-0233, DOI: 10.1088/0957-0233/25/3/035604 [gefunden am 2014-02-17]**

**Beschreibung**

Die vorliegende Erfindung betrifft ein Verfahren und eine Vorrichtung zur photothermischen Untersuchung einer Probe.

Ein Verfahren und eine Vorrichtung zur photothermischen Untersuchung einer Probe sind z. B. aus dem Prospekt *"LFA 447 Nano Flash®"* der Fa. Netzsch-Gerätebau GmbH, Selb, Deutschland, bekannt (am 04.07.2012 im Internet abrufbar unter *http://www.netzsch-thermal-analysis.com/download/LFA_447_NanoFlash_D_1108_de_180.pdf)*. Die bekannte Vorrichtung umfasst:

- eine Probenkammer in Form eines elektrisch betriebenen Ofens mit einem darin untergebrachten Probenhalter zur Anordnung und Temperierung der Probe,

- eine Xenonblitzlampe als Anregungsquelle zum Erzeugen eines auf eine als "Anregungsseite" fungierende Vorderseite der zu untersuchenden Probe gerichteten Anregungsstrahls, und

- einen Infrarotdetektor zum Erfassen einer von einer "Erfassungsseite", hier Rückseite der Probe abgegebenen Wärmestrahlung.

Mittels der bekannten Vorrichtung lassen sich physikalische Eigenschaften des Materials der Probe wie insbesondere dessen Temperaturleitfähigkeit sowie dessen Wärmeleitfähigkeit ermitteln. Bei Kenntnis der Dichte des betreffenden Materials lässt sich darüber hinaus die spezifische Wärmekapazität des Materials ermitteln.

Das Funktionsprinzip der bekannten Vorrichtung besteht darin, mittels der Anregungsquelle eine erste Seite ("Vorderseite") der Probe mit einem kurzen elektromagnetischen Anregungspuls zu bestrahlen, sodann eine infolge des Anregungspulses von einer der ersten Seite gegenüberliegenden zweiten Seite ("Rückseite") der Probe abgegebene Wärmestrahlung (als ein Maß für die Temperatur an der zweiten Seite) zu erfassen, und schließlich die erfasste Wärmestrahlung basierend auf einem physikalisch-mathematischen Modell auszuwerten, um mittels einer mathematischen Ausgleichsrechnung die genannten Materialparameter (als die bei der Ausgleichsrechnung abgeschätzten entsprechenden Modellparameter) zu ermitteln.

Die Temperierbarkeit der Probenkammer ermöglicht derartige Messungen wahlweise entweder bei einer vorgegebenen bestimmten Probentemperatur, oder über einen größeren Temperaturbereich (indem die Temperatur z. B. in kleinen Schritten verändert wird und eine entsprechende Vielzahl von Einzelmessungen durchgeführt wird).

Eine derartige photothermische Untersuchung funktioniert gut für opake Proben, d. h. ohne eine größere Durchlässigkeit des Probenmaterials für die an den Oberflächen bzw. (auch) im Inneren der Probe entstehende Wärmestrahlung.

Problematisch ist jedoch die Untersuchung von mehr oder weniger transparenten Proben, da die in diesem Fall aus physikalisch-mathematischen Überlegungen resultierenden Modelle relativ komplex werden, insbesondere zahlreichere in der Ausgleichsrechnung abzuschätzende Modellparameter enthalten, so dass die Genauigkeit der Ermittlung der letztendlich interessanten Materialparameter wie insbesondere z. B. Temperaturleitfähigkeit und/oder Wärmeleitfähigkeit darunter leidet. Ein verwandtes Verfahren zur photothermischen Untersuchung wird in H. Mehling ET AL: "Thermal Diffusivity of Semitransparent Materials Determined by the Laser-Flash Method Applying a New Analytical Model",International Journal of Thermophysics, 1998 offenbart.

Es ist eine Aufgabe der vorliegenden Erfindung, einen neuartigen Weg für eine photothermische Untersuchung einer Probe aufzuzeigen, mittels welchem insbesondere auch für transparente Proben eine Ermittlung von thermischen Materialparametern mit relativ hoher Genauigkeit ermöglicht ist.

Diese Aufgabe wird gemäß der Erfindung durch ein Verfahren nach Anspruch 1 bzw. eine Vorrichtung nach Anspruch 8 gelöst. Die abhängigen Ansprüche sind auf vorteilhafte Weiterbildungen der Erfindung gerichtet.

Die Abschätzung der derartiger 1 Parameter im Modell ist hierbei gleichbedeutend mit der Ermittlung der entsprechenden Parameter für die Probe.

Daher erlaubt das Verfahren insbesondere die Ermittlung der Temperaturleitfähigkeit (a) und, falls die spezifische Wärmekapazität ($c_p$) ebenfalls bekannt ist bzw. z. B. anhand einer Referenz gemessen wurde, auch der Wärmeleitfähigkeit (k). Bevorzugt wird nach Abschluss der Auswertung wenigstens einer der Materialparameter $\alpha$ und k ausgegeben (und/oder gespeichert).

Hierzu ist anzumerken, dass die Parameter a, k bekanntermaßen mit der Dichte (p) und der spezifischen Wärmekapazität ($c_p$) verknüpft sind, was im Rahmen der Auswertung bei Kenntnis der Dichte (p) und der spezifischen Wärmekapazität ($c_p$) somit eine gleichzeitige Ermittlung der Parameter $\alpha$ und k erlaubt.

In einer bevorzugten Ausführungsform werden bei der mathematischen Ausgleichsrechnung die Parameter a, $L \times h/k$ und $\eta'$ abgeschätzt.

Der zur Erwärmumg der ersten Seite der Probe dienende Anregungspuls kann z. B. mittels einer Blitzlampe oder eines Lasers erzeugt werden. In einer bevorzugten Ausführungsform wird der Anregungspuls mittels eines gepulst betriebenen Lasers erzeugt.

Bevorzugt wird der Anregungspuls mit einem Wellenlängenbereich (bzw. bei monochromatischer Erzeugung mit einer dominierenden Wellenlänge in einen Bereich von) 100 nm bis 5 $\mu$m erzeugt. Insbesondere bei Einsatz eines Lasers kann der Anregungspuls z. B. mit einer Wellenlänge im Bereich von 700 nm bis 2 $\mu$m vorgesehen sein (z. B. Nd:Glas-Laser: 1062 nm).

Im Allgemeinen vorteilhaft ist eine kurze Pulsdauer (Pulsbreite) des Anregungspulses, beispielsweise kleiner als 1 ms, insbesondere kleiner als 0,5 ms. Andererseits, auch im Hinblick auf die Erzielung einer nicht allzu kleinen Pulsenergie, ist im Allgemeinen eine Pulsdauer von mindestens 100 ns vorteilhaft (Insbesondere sehr kleine Pulsdauern z. B. im Bereich einiger 10 ns lassen sich z. B. mit gütegeschalteten Lasern erzielen).

Die Pulsenergie (pro Anregungspuls) beträgt bevorzugt mindestens 1 J, insbesondere mindestens 5 J. Andererseits genügt in vielen Anwendungsfällen eine Pulsenergie von maximal 50 J, insbesondere maximal 20 J.

In einer bevorzugten Ausführungsform ist die Probe während der Messprozedur (Bestrahlen mit dem Anregungspuls und Erfassen der abgegebenen Wärmestrahlung) in einer gasdichten Umgebung angeordnet. Damit kann vorteilhaft eine für die Reproduzierbarkeit der Messung vorteilhafte gut definierte Umgebung bzw. Umgebungsbedingung für die Probe geschaffen werden, sei es z. B. eine Edelgasatmosphäre und/oder eine evakuierte Umgebung (Vakuum).

Zum Erfassen der Wärmestrahlung kann auf hierfür bekannten Stand der Technik zurückgegriffen werden. Insbesondere kann hierfür ein Infrarotdetektor von an sich bekannter Art eingesetzt werden. Ein derartiger Infrarotdetektor wird bevorzugt gekühlt (z. B. $LN_2$-gekühlt).

Wie bereits erwähnt zielt die Erfindung insbesondere auf die photothermische Untersuchung von transparenten Proben ab. In dieser Hinsicht kann insbesondere eine Probe vorgesehen sein, die an wenigstens einer Stelle im Wellenlängenintervall von 2 $\mu$m bis 6 $\mu$m einen Transmissionskoeffizienten von mindestens 0,3, insbesondere mindestens 0,4 besitzt.

Insbesondere ist die Erfindung zur Untersuchung von Proben aus einem Glasmaterial geeignet.

Die zu untersuchende Probe ist bevorzugt plättchenförmig, z. B. von rechteckigem oder kreisrundem Format, und besitzt bevorzugt eine über die Probenfläche betrachtet einheitliche Dicke.

Die hier für das erfindungsgemäße Verfahren beschriebenen besonderen Ausführungsformen und Weiterbildungen können in analoger Weise als Ausführungsformen bzw. Weiterbildungen der erfindungsgemäßen Vorrichtung eingesetzt werden. Für die Vorrichtung beschriebenen Ausführungsformen und Weiterbildungen können in analoger Weise als Ausführungsformen bzw. Weiterbildungen des Verfahrens vorgesehen werden.

Die Erfindung wird nachfolgend anhand von Ausführungsbeispielen von photothermischen Untersuchungen mit Bezug auf die beigefügten Zeichnungen weiter beschrieben. Es stellen dar:

Fig. 1    eine Vorrichtung zur photothermischen Untersuchung einer Probe,

Fig. 2    ein Diagramm eines beispielhaften Verlaufes einer bei einer Untersuchung einer opaken Probe erfassten Wärmestrahlung in Abhängigkeit von der Zeit,

Fig. 3    ein Diagramm eines beispielhaften Verlaufes einer bei einer Untersuchung einer transparenten Probe erfassten Wärmestrahlung in Abhängigkeit von der Zeit, bei relativ großen Verlusten an Wärme von der Probe in deren Umgebung, und

Fig. 4    ein Diagramm eines beispielhaften Verlaufes einer bei einer Untersuchung einer transparenten Probe erfassten Wärmestrahlung in Abhängigkeit von der Zeit, bei relativ kleinen Verlusten an Wärme von der Probe in deren Umgebung.

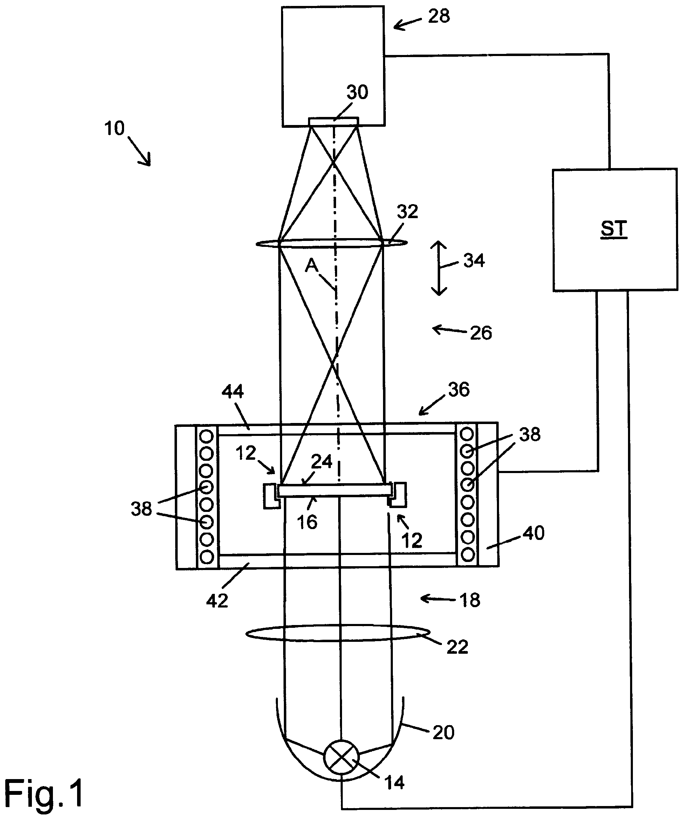

Fig. 1 zeigt schematisiert ein Ausführungsbeispiel einer Vorrichtung 10 zur photothermischen Untersuchung einer plättchenförmigen (hier z. B. zylindrischen) Probe P, die aus einem homogenen Material besteht und in einer Probenaufnahme eines Probenhalters 12 der Vorrichtung 10 aufgenommen ist.

Die Vorrichtung 10 umfasst ferner einen gepulst betriebene Hochleistungs-Xenonblitzlampe 14 als eine Anregungsquelle zum Erzeugen von elektromagnetischen Anregungs(strahl)pulsen 18, die auf eine erste Seite der Probe P, nachfolgend auch als "Vorderseite" 16 der Probe P bezeichnet, gerichtet sind.

Alternativ zu einer Blitzlampe kann als Anregungsquelle insbesondere z. B. ein gepulst betriebener Laser verwendet werden.

Die Energie der einzelnen Anregungspulse 18 beträgt z. B. etwa 10 J und ist vom Benutzer an einer programmgesteuerten Steuereinrichtung ST einstellbar.

Die Steuereinrichtung ST steuert im Rahmen von wählbaren Messprogrammen den Betrieb sämtlicher ansteuerbarer Komponenten der Vorrichtung 10.

Im dargestellten Beispiel wird der gepulste Anregungsstrahl 18 mittels eines Reflektors 20 und einer Kollimations- bzw. Fokussierungslinse 22 auf die als "Anregungsseite" fungierende Probenvorderseite 16 gerichtet, wobei im dargestellten Beispiel die nahezu gesamte Fläche der Probenvorderseite 16 gleichmäßig bestrahlt wird (vgl. in Fig. 1 eingezeichnete Blitzlichtstrahlen).

Optional kann die "Anregungsoptik", im dargestellten Ausführungsbeispiel also z. B. die Linse 22, verstellbar vorgesehen sein, so dass eine Einstellung des mit dem Anregungsstrahl zu bestrahlenden Bereiches auf der Anregungsseite der Probe P vorgenommen werden kann (Einstellung eines "Spots").

Die einzelnen Heizpulse (Anregungspulse 18) der Blitzlampe 14 bewirken eine zeitabhängige (hier: gepulste) Erwärmung der Probenvorderseite 16, so dass davon ausgehend eine Wärmepulsausbreitung durch das Material der Probe P hindurch bis hin zu einer der ersten Seite (Vorderseite) entgegengesetzten zweiten Seite, nachfolgend auch als "Probenrückseite" 24 bezeichnet, resultiert.

Im dargestellten Beispiel ist zur Erfassung der von der Probenrückseite 24 abgegebenen Wärmestrahlung 26 ein (bevorzugt gekühlter) Infrarotdetektor 28 mit einem strahlungsempfindlichen Detektorbereich 30 vorgesehen, wobei zwischen dem Probenhalter 13 und dem Detektor 28 bzw. dessen Detektorfläche 30 eine Erfassungsoptik umfassend eine Linse 32 vorgesehen ist, die zur Festlegung eines gewünschten, bevorzugt kreisrunden "Sichtfeldes" des Detektors 28 auf der Probenrückseite 24 dient.

Optional kann die Erfassungsoptik für eine Verstellbarkeit des Sichtfeldes auf der Probenrückseite ausgebildet sein. Hierfür kann im dargestellten Beispiel z. B. eine Verlagerbarkeit der Linse 32 in Richtung einer optischen Achse A vorgesehen sein. Eine solche Verlagerbarkeit der Linse 32 ist in Fig. 1 durch einen Doppelpfeil 34 symbolisiert.

In Kenntnis (z. B. aufgrund der Ansteuerung) bzw. durch Erfassung (z. B. aufgrund einer Messung) eines durch einen Anregungspuls 18 an der Probenvorderseite 16 erfolgenden Wärmeenergieeintrages Q und/oder des zeitlichen Verlaufes einer Strahlungsstromdichte E(t) des Anregungspulses 18 kann durch eine Erfassung der auf auf der Rückseite 24 der Probe P abgegebenen Wärmestrahlung 26 eine Untersuchung ("photothermische Untersuchung") von physikalischen Eigenschaften (Materialparametern) der Probe P in weiter unten detaillierter beschriebener Weise realisiert werden.

Mit dieser Untersuchungsmethode ermittelbare physikalische Eigenschaften des betreffenden Probenmaterials sind insbesondere dessen Wärmeleitfähigkeit (engl. "thermal conductivity") sowie dessen Temperaturleitfähigkeit (oftmals auch als "thermische Diffusivität" oder "Wärmediffusivität" bezeichnet; engl. "thermal diffusivity").

Bei einer bevorzugten Verfahrensvariante erfolgt sowohl die elektromagnetische Anregung an der Probenvorderseite, als auch die Wärmestrahlungserfassung an der Probenrückseite, jeweils über die im Wesentlichen gesamte Vorderseite bzw. Rückseite der Probe P. Damit lassen sich die Wärmeleitfähigkeit und/oder die Temperaturleitfähigkeit einer Probe aus homogenem Material besonders präzise ermitteln.

Die "Wärmeleitfähigkeit", nachfolgend auch mit dem Formelzeichen "k" bezeichnet, quantifiziert den Wärmetransport infolge eines Temperaturgefälles. Anschaulich ausgedrückt entspricht die Wärmeleitfähigkeit derjenigen Wärmemenge (in Joule, J, bzw. Wattsekunde, Ws), die in einer Zeitspanne von 1 s durch eine 1 m dicke Materialschicht der Fläche 1 m$^2$ fließt, wenn der Temperaturunterschied 1 K beträgt.

Die "Temperaturleitfähigkeit" , nachfolgend auch mit dem Formelzeichen "a" bezeichnet, quantifiziert die zeitliche Veränderung der räumlichen Verteilung der Temperatur durch Wärmeleitung infolge eines Temperaturgefälles.

Zwischen diesen beiden Materialparametern k, α besteht bekanntermaßen folgender Zusammenhang:

$$k = \alpha \times \rho \times c_p.$$

Hierbei bezeichnen:

k die Wärmeleitfähigkeit
α die Temperaturleitfähigkeit
ρ die Dichte
$c_p$ die spezifische Wärmekapazität

Um eine temperaturabhängige Ermittlung der Materialparameter k und/oder α zu ermöglichen, umfasst im dargestellten Beispiel der Vorrichtung 10 ein Mantel einer den Probenhalter 12 beinhaltenden Probekammer 36 elektrisch betriebene Heizelemente 38 und optional eine in angesteuerter Weise von einem Kühlmittel durchströmbare Kühlpassage 40. Damit können z. B. im Rahmen eines Messprogrammes nacheinander mehrere verschiedene Probentemperaturen eingestellt werden (bzw. eine Temperierung mit einer kontinuierlichen Heizung oder Kühlung erfolgen), um damit für verschiedene Probentemperaturen jeweils eine oder mehrere Anregungspuls auf die Probe P zu richten und die Intensität der für jeden Anregungspuls daraufhin erfassten Wärmestrahlung 26 für diese verschiedenen Probentemperaturen auszuwerten und somit auch die Temperaturabhängigkeit der Materialparameter k und/oder α zu ermitteln.

Die Steuereinrichtung ST kann mit geeigneten Auswertemitteln (z. B. programmmgesteuerte Rechnereinheit) und Anzeige- und/oder Speichermitteln zur Ausgabe bzw. Speicherung der ermittelten Materialparameter ausgestattet (oder verbunden) sein.

Stirnseitige Enden der Probenkammer 36 sind im dargestellten Beispiel von optischen Filtern 42 (anregungsseitig) und 44 (erfassungsseitig) gebildet. Deren Filtercharakteristiken sind so vorgesehen, dass eine Transmission jeweils möglichst nur für den zu erwartenden Spektralbereich gegeben ist, also einerseits für das Spektrum des Anregungsstrahls 18 (Filter 42) und andererseits für das Spektrum der Wärmestrahlung 26 (Filter 44).

Zum besseren Verständnis der erfindungsgemäßen Funktionsweise der Vorrichtung 10 seien nachfolgend zunächst nicht im Rahmen der Erfindung liegende, aus physikalischen Überlegungen naheliegende Auswertungen für den Fall einer (für die Anregungsstrahlung) "opaken Probe P" und einer (für die Anregungsstrahlung) "transparenten Probe P" beschrieben. Diese Auswertung kann z. B. mit der beschriebenen Vorrichtung 10 (bzw. der darin enthaltenen Steuereinrichtung ST) durchführbar sein.

Im Fall einer opaken Probe P eignet sich zum Auswerten der Intensität der erfassten Wärmestrahlung das durch folgende Gleichungen definierte Modell:

$$\partial^2 T/\partial x^2 = 1/\alpha \times \partial T/\partial t \qquad \text{für } 0<x<L,\ t>0 \qquad \text{(Wärmediffusionsgleichung)} \qquad (1)$$

$$k \times \partial T/\partial x - \text{h} \times T = -E(t) \qquad \text{für } x=0,\ t>0 \qquad \text{(Randbedingung Vorderseite)} \qquad (2)$$

$$k \times \partial T/\partial x + \text{h} \times T = 0 \qquad \text{für } x=L,\ t>0 \qquad \text{(Randbedingung Rückseite)} \qquad (3)$$

$$T(x,0) = 0 \qquad \text{für } t=0 \qquad \text{(Anfangsbedingung)} \qquad (4)$$

wobei bezeichnen:

T   die (orts- und zeitabhängige) Temperatur der Probe,
L   die Dicke der Probe,
x   die in Dickenrichtung der Probe betrachtete Ortskoordinate, mit x=0 an der Vorderseite der Probe und x=L an der Rückseite der Probe,
t   die Zeit, mit t=0 zum Zeitpunkt des Anregungspulses,
E(t)  die (zeitabhängige) Strahlungsstromdichte des Anregungspulses,
α   die Temperaturleitfähigkeit der Probe,
k   die Wärmeleitfähigkeit der Probe,
h   den Wärmetransferkoeffizienten an den Probenoberflächen.

In diesem Modell quantifiziert der Wärmetransferkoeffizient h den (konvektiven) Wärmeverlust an der betreffenden Probenseite an die Umgebung (in der Probenkammer).

Im Rahmen eines mittels der Vorrichtung 10 durchgeführten Messprogramms steuert die Steuereinrichtung ST den Betrieb der Temperierungsmittel (Heizelemente 38 und Kühlpassage 40; z. B. "zeitliches Temperaturverlaufsprogramm") und den Betrieb der Anregungsquelle (Xenonblitzlampe 14 bzw. Laser; z. B. zeitliche Pulsperiode und/oder Pulsenergie), wobei ausgehend von dem IR-Detektor 28 wie in Fig. 1 veranschaulicht der Steuereinrichtung ST außerdem Signale bzw. Daten übertragen werden, welche für den zeitlichen Verlauf der Temperatur T(L,t) an der Probenrückseite repräsentativ sind (oder aus welchen die Steuereinrichtung diesen zeitlichen Verlauf der Temperatur T(L,t) ermitteln kann).

Basierend auf dem oben beschriebenen Modell kann daher mittels der Steuereinrichtung ST, bevorzugt programmgesteuert, eine mathematische Ausgleichsrechnung durchgeführt werden, um anhand eines aus der erfassten Wärmestrahlung ermittelten zeitlichen Verlaufes der Temperatur T(L,t) an der Probenrückseite insbesondere die Parameter a und k des Modells abzuschätzen. Diese abgeschätzten Parameter α und k sind dann die durch die Auswertung gewonnenen Materialparameter "Wärmeleitfähigkeit (auch: "thermische Leitfähigkeit") und "Temperaturleitfähigkeit (auch: "thermische Diffusivität") der betreffenden Probe P.

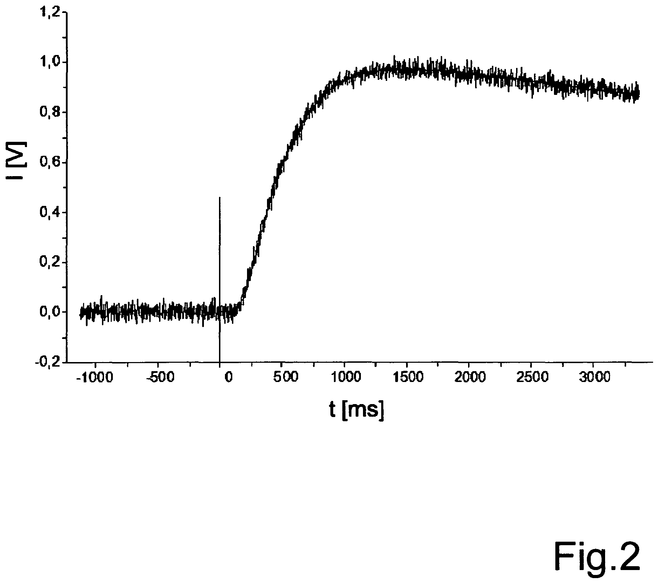

Dieses Vorgehen sei nachfolgend am Beispiel einer Verwendung der Vorrichtung 10 mit Bezug auf ein in Fig. 2 gezeigtes Messergebnis an einer opaken (z. B. metallischen) Probe P nochmals veranschaulicht.

Fig. 2 zeigt beispielhaft, für eine opake Probe P, den zeitlichen Verlauf eines für eine Intensität der mittels des Detektors 28 erfassten Wärmestrahlung 26 repräsentativen Detektorsignals I. Es sei der Einfachheit halber angenommen, dass dieser zeitabhängige Verlauf I(t) gleichzeitig repräsentativ für den zeitlichen Verlauf der Temperatur T(L,t) an der Rückseite 24 der Probe P ist. Ganz allgemein kann in Kenntnis der Eigenschaften des Detektors 28 mittels der Steuereinrichtung ST stets in geeigneter Weise eine entsprechende Umrechnung der unmittelbar aufgenommenen Größe I(t) in die für die nachfolgende weitere Auswertung benötigte Größe T(L,t) vorgenommen werden.

In Fig. 2, zu einem Zeitpunkt t=0 erfolgt die Bestrahlung der Probenvorderseite mit einem Anregungspuls 18 von vorgegebener Energie und/oder vorgegebenem zeitlichen Verlauf der Strahlungsstromdichte E(t).

Bei der opaken, d. h. für Wärmestrahlung undurchlässigen Probe P entspricht ein aus der Bestrahlung resultierender Wärmeeintrag Q an der Probenvorderseite dem mit der Bestrahlungsfläche multiplizierten Integral der Strahlungsstromdichte E(t) des Anregungspulses 18 über die Zeit t.

Die Zeitdauer (zeitliche "Breite") des Anregungspulses 18 ist in der Praxis zumeist (und bevorzugt) sehr viel kleiner als diejenige Zeitdauer, in der sich darauffolgend eine, je nach Probendicke (L) und Probeneigenschaften (insbesondere $\alpha$ und k), charakteristische Temperaturvariation an der Probenrückseite 24 ergibt.

In diesem Fall genügt es, wenn z. B. lediglich die Gesamtenergie des Anregungspulses 18 (z. B. ca. 10 J) bekannt ist. Der Zeitverlauf der Strahlungsstromdichte E(t) kann dann z. B. als Diracsche Deltafunktion $\delta(t)$ mathematisch angenähert bzw. angenommen werden: $E(t) = Q / A_p \times \delta(t)$, wobei $A_p$ die von dem Anregungspuls bestrahlte Fläche bezeichnet.

Wie aus Fig. 2 ersichtlich beginnt zu einem Zeitpunkt von etwa t = 130 ms ein Anstieg der Temperatur T(L,t) an der Probenrückseite 24. Dies bedeutet anschaulich, dass die an der Probenvorderseite 16 aufgebrachte Wärmeenergie Q nach etwa 130 ms an der Probenrückseite 24 "ankommt".

Zu einem Zeitpunkt von etwa t = 1500 ms durchläuft die Temperatur T(L,t) ein Maximum. Dies bedeutet anschaulich, dass ab diesem Zeitpunkt an der Probenrückseite 24 durch Konvektion und/oder Strahlung in die Umgebung mehr Wärme "verlorengeht" als durch das Probeninnere hindurch durch Konvektion (noch) nachgeliefert wird.

Es ist klar, dass die genannten Zeitpunkte, aber auch der gesamte detaillierte Verlauf der Variation der Temperatur T(L,t) an der Probenrückseite 24 insbesondere von den Materialparametem $\alpha$ und k (bzw. h/k) abhängen und durch das oben aufgeführte Modell beschreibbar sind, so dass durch die erwähnte mathematische Ausgleichsrechnung anhand des ermittelten zeitlichen Verlaufes der Temperatur T(L,t) ohne weiteres die Parameter $\alpha$ und h/k des Modells abgeschätzt werden können (z. B. mathematischer "Fit" der Parameter a und h/k (bzw. L $\times$ h/k) mittels der "Methode der kleinsten Fehlerquadrate" oder dergleichen). Damit können zumindest die Temperaturleitfähigkeit (a) und der Parameter "h/k" bzw. "L $\times$ h/k" ermittelt (berechnet) werden. Bei Kenntnis bzw. Messung der spezifischen Wärmekapazität ($c_p$) liefert dies wie bereits erläutert zudem die Wärmeleitfähigkeit (k) der betreffenden Probe P.

Das oben beschriebene Modell der opaken Probe vermag relativ genaue Werte der Materialparameter $\alpha$ und h/k (bzw. L $\times$ h/k) zu liefern. Anschaulich ausgedrückt enthält das aus 4 Gleichungen bestehende Modell der opaken Probe insgesamt "nur" 2 unbekannte, mittels einer Ausgleichsrechnung abzuschätzende Parameter (a und h/k).

Im Fall einer für Wärmestrahlung mehr oder weniger transparenten Probe P taugt das vorstehend erläuterte Auswertungsmodell jedoch nicht, sondern bedarf einer Modifikation. Aus physikalischen Überlegungen ergibt sich folgendes Modell:

$$\partial^2 T/\partial x^2 = 1/\alpha \times \partial T/\partial t \qquad \text{für } 0<x<L,\ t>0 \qquad (1)$$

$$k \times \partial T/\partial x - \text{h} \times T = -E(t) + \text{h} \times \eta \times (T(0,t) - T(L,t)) \qquad \text{für } x=0,\ t>0 \qquad (2)$$

$$k \times \partial T/\partial x + \text{h} \times T = -\text{h} \times \eta \times (T(0,t) - T(L,t)) \qquad \text{für } x=L,\ t>0 \qquad (3)$$

$$T(x,0) = 0 \qquad \text{für } t=0 \qquad (4)$$

wobei bezeichnen:

T  die (orts- und zeitabhängige) Temperatur der Probe,
L  die Dicke der Probe,

x     die in Dickenrichtung der Probe betrachtete Ortskoordinate, mit x=0 an der Vorderseite der Probe und x=L an der Rückseite der Probe,

t     die Zeit, mit t=0 zum Zeitpunkt des Anregungspulses,

E(t)     die (zeitabhängige) Strahlungsstromdichte des Anregungspulses,

$\alpha$     die Temperaturleitfähigkeit der Probe,

k     die Wärmeleitfähigkeit der Probe,

h     den Wärmetransferkoeffizienten an den Probenoberflächen,

$\eta$     einen (dimensionslösen) "Transparenzfaktor".

Dieses Modell für eine transparente Probe ist somit (gegenüber dem Modell der opaken Probe) in den beiden Randbedingungen an den Probenseiten jeweils durch den Term $h \times \eta \times (T(0,t) - T(L,t))$ modifiziert (ergänzt). Dieser Term bzw. der darin enthaltene Transparenzfaktor $\eta$ charakterisiert denjenigen Energietransport, welcher infolge der Transparenz der Probe P durch Wärmestrahlung von der Vorderseite 16 zur Rückseite 24 durch die Probe P hindurch erfolgt.

Basierend auf diesem Modell für eine transparente Probe kann ebenfalls eine mathematische Ausgleichsrechnung durchgeführt werden, um anhand des zeitlichen Verlaufes der Temperatur T(L,t) an der Probenrückseite 24 die Parameter a, k, h und $\eta$ bzw. zumindest die Parameter a, h/k und $\eta$ des Modells abzuschätzen. Die sich hieraus und unter Berücksichtigung einer z. B. anhand einer Referenz ebenfalls gemessenen Wärmekapazität ergebenden geschätzten Parameter $\alpha$ und k, sind dann die durch die Auswertung gewonnenen Materialparameter Wärmeleitfähigkeit (k) und Temperaturleitfähigkeit (a) der betreffenden Probe P.

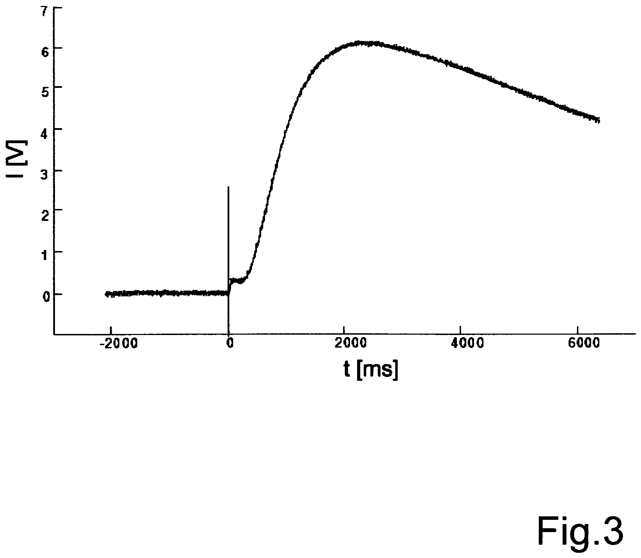

Dieses Vorgehen sei nachfolgend am Beispiel einer Verwendung der Vorrichtung 10 mit Bezug auf ein in Fig. 3 gezeigtes Messergebnis an einer transparenten Probe P (z. B. aus einem Glasmaterial) veranschaulicht.

Fig. 3 zeigt beispielhaft, für eine transparente Probe P, den zeitlichen Verlauf eines für eine Intensität der Wärmestrahlung 26 bzw. den zeitlichen Verlauf der Temperatur T(L,t) an der Rückseite 24 der Probe P repräsentativen Signals I.

In Fig. 3, zu einem Zeitpunkt t=0 erfolgt die Bestrahlung der Probenvorderseite 16 mit einem kurzen Anregungspuls 18 von vorgegebener Energie und/oder vorgegebenem zeitlichen Verlauf der Strahlungsstromdichte E(t).

Es sei angenommen, was bevorzugt ist, dass die beiden Probenseiten 16, 24 "geschwärzt" sind, um die Absorption der Bestrahlungsenergie (an der Vorderseite 16) und die Emmission der Wärmestrahlung (an der Rückseite 24) zu vergrößern. In diesem Fall entspricht ein aus der Bestrahlung resultierender Wärmeeintrag Q an der Probenvorderseite wieder dem mit der Bestrahlungsfläche multiplizierten Integral der Strahlungsstromdichte E(t) des Anregungspulses 18 über die Zeit t.

Wie aus Fig. 3 ersichtlich, und abweichend von dem Beispiel gemäß Fig. 2, da die Probe P transparent ist, beginnt nahezu sofort, also bei t = 0 ms bereits ein kleiner, stufenartiger Anstieg der Temperatur T(L,t) an der Probenrückseite 24. Dies deshalb, weil ausgehend von der Probenvorderseite 16 ein gewisser Energieanteil durch Wärmestrahlung die Probe P rasch durchquert und die Temperatur T(L,t) an der Rückseite 24 erhöht.

Außerdem ist aus Fig. 3 ersichtlich, analog dem Beispiel gemäß Fig. 2, dass nach einer gewissen Verzögerung (hier in der Größenordnung von etwa 100 bis 200 ms) derjenige Anstieg der Temperatur T(L,t) an der Probenrückseite 24 einsetzt und in der Folge dominant wird, welcher durch die Wärmeleitung durch das Probenmaterial hindurch bewirkt wird.

Zu einem Zeitpunkt von im dargestellten Beispiel etwa t = 2280 ms durchläuft die Temperatur T(L,t) ein Maximum. Dies bedeutet anschaulich wieder, dass ab diesem Zeitpunkt an der Probenrückseite durch Konvektion und/oder Strahlung in die Umgebung mehr Wärme "verlorengeht" als durch das Probeninnere hindurch nachgeliefert wird.

Die genannten Zeitpunkte, aber auch der gesamte zeitliche Verlauf der Variation der Temperatur T(L,t) an der Probenrückseite 24, sind insbesondere von den Materialparametern a, h/k (bzw. L x h/k) und $\eta$ abhängig und können durch das oben aufgeführte Modell beschrieben werden.

Daher könnten durch eine mathematische Ausgleichsrechnung anhand des ermittelten zeitlichen Verlaufes der Temperatur T(L,t) wieder die Parameter $\alpha$ und k, und zusätzlich die Parameter h und $\eta$ des Modells abgeschätzt werden, um so die Materialparameter Wärmeleitfähigkeit (k) und/oder Temperaturleitfähigkeit (a) der Probe P zu ermitteln.

Jedoch hat sich gezeigt, dass es mit diesem Modell der transparenten Probe nicht immer gelingt, die Materialparameter k und $\alpha$ mit ausreichender Genauigkeit (bzw. im Hinblick auf die verwendete Methode der Ausgleichsrechnung mit geringer "statistischer Unsicherheit") zu ermitteln. Anschaulich ausgedrückt mag das daran liegen, dass das aus 4 Gleichungen bestehende Modell der transparenten Probe insgesamt 3 unbekannte (abzuschätzende) Parameter enthält (a, h/k und $\eta$), wohingegen das Modell der opaken Probe bei gleicher Anzahl an Gleichungen einen unbekannten Parameter ($\eta$) weniger enthält.

In diesem Zusammenhang hat sich insbesondere gezeigt, dass das Modell nur dann einigermaßen gut "funktioniert", d. h. ausreichend genaue Werte für k und $\alpha$ liefert, wenn der zeitliche Verlauf von T(L,t) tatsächlich (und wie z. B. aus Fig. 3 ersichtlich) ein eher deutlich ausgeprägtes Maximum durchläuft bzw. zum Ende dieses Verlaufes hin eine mehr oder weniger deutliche Temperaturverringerung an der Probenrückseite auftritt.

Dieses Kriterium ist gleichbedeutend damit, dass an den Probenoberflächen (bzw. zumindest der Probenrückseite 24) "relativ hohe Wärmeverluste" an die Umgebung stattfinden (die durch den Term h $\times \eta \times$ ($T$(0,t) - $T$(L,t)) in den Randbedingungen des Modells berücksichtigt sind).

Anschaulich ausgedrückt mag eine Erklärung sein, dass ein "hoher Wärmeverlust" bzw. gleichbedeutend der entsprechende Abfall der Temperatur T(L,t) zum Ende hin die statistische Zuverlässigkeit des mathematischen "Fits" (Ausgleichsrechnung) hinsichtlich des in den Randbedingungen enthaltenen Terms "h $\times \eta$" vorteilhaft erhöht.

In der Praxis ist es jedoch andererseits insofern vorteilhaft, wenn genau diese Wärmeverluste minimiert sind, da diese Verluste durch das beschriebene Modell nicht unbedingt völlig exakt erfasst werden und darüber hinaus mathematisch-physikalisch gewissermaßen als "störend" bei der Ermittlung der Wärmeleitfähigkeit (k) und der Temperaturleitfähigkeit (a) der Probe P zu betrachten sind (wegen der oben erwähnten Vergrößerung der Anzahl von "Unbekannten").

Die Wärmeverluste lassen sich insbesondere dadurch verringern, dass die Messung an der Probe P unter einer evakuierten Umgebung, also Unterdruck bzw. Vakuum durchgeführt wird, um eine von der Probe P ausgehende Wärmeableitung an die Umgebung entsprechend zu verringern. Die Vorrichtung 10 ist daher bevorzugt mit (nicht dargestellten) Mitteln zum Evakuieren der Probenkammer 36 ausgestattet. Beispielsweise können diese Mittel eine z. B. von der Steuereinrichtung ST angesteuerte und mit dem Inneren der Probenkammer 36 verbundene Vakuumpumpe umfassen.

Gemäß der vorliegenden Erfindung ist die Vorrichtung 10 in der Lage, etwa aufgrund eines entsprechend wählbaren Messprogramms, welches ein erfindungsgemäßes Verfahren zur photothermischen Untersuchung der Probe bewerkstelligt, eine photothermische Untersuchung einer transparenten Probe auch bei relativ geringen Wärmeverlusten der genannten Art bei gleichzeitig relativ hoher Genauigkeit der Ermittlung der betreffenden Materialparameter durchzuführen.

Wesentlich hierfür ist die Verwendung eines neuartigen Modells zur Beschreibung der (transparenten) Probe im Rahmen des Untersuchungsverfahrens bzw. im Rahmen der Ausgestaltung (z. B. Programmierung) der Steuereinrichtung ST der Untersuchungsvorrichtung 10.

Dieses neuartige Modell ist durch folgende Gleichungen definiert:

$$\partial^2 T/\partial x^2 = 1/\alpha \times \partial T/\partial t \qquad \text{für } 0<x<L,\ t>0 \qquad (1)$$

$$k \times \partial T/\partial x - \text{h} \times T = -E(t) + \eta' \times (T(0,t) - T(L,t)) \qquad \text{für } x=0,\ t>0 \qquad (2)$$

$$k \times \partial T/\partial x + \text{h} \times T = -\eta' \times (T(0,t) - T(L,t)) \qquad \text{für } x=L,\ t>0 \qquad (3)$$

$$T(x,0) = 0 \qquad \text{für } t=0 \qquad (4)$$

wobei bezeichnen:

T     die (orts- und zeitabhängige) Temperatur der Probe,
L     die Dicke der Probe,
x     die in Dickenrichtung der Probe betrachtete Ortskoordinate, mit x=0 an der ersten Seite der Probe und x=L an der zweiten Seite der Probe,
t     die Zeit, mit t=0 zum Zeitpunkt des Anregungspulses,
E(t)     die (zeitabhängige) Strahlungsstromdichte des Anregungspulses,
$\alpha$     die Temperaturleitfähigkeit der Probe,
k     die Wärmeleitfähigkeit der Probe,
h     den Wärmetransferkoeffizienten an den Probenoberflächen,
$\eta'$     einen "Pauschal-Transparenzfaktor"

Gegenüber dem weiter oben erläuterten, aus physikalisch-mathematischer Sicht "plausiblen" Modell besteht die Modifikation des erfindungsgemäß eingesetzten Modells darin, dass in den beiden Randbedingungen der Term h $\times \eta$ jeweils ersetzt wurde durch den neuen Parameter $\eta'$.

Aus physikalisch-mathematischer Sicht ergibt sich für die Sinnhaftigkeit dieser Modifikation bzw. die physikalische Bedeutung des Parameters η' keine unmittelbar einleuchtende Erklärung. Insofern kann man den Parameter η' gewissermaßen als bloße mathematische "Hilfsgröße" (ohne physikalisch einfach definierte Bedeutung) bezeichnen. Im Prinzip handelt es sich bei der erfindungsgemäß vorgenommenen Modifikation augenscheinlich um eine Vergröberung und mithin "Verschlechterung" des Modells.

Wenn die Steuereinrichtung ST basierend auf diesem Modell eine mathematische Ausgleichsrechnung durchführt, um anhand des zeitlichen Verlaufes der Temperatur T(L,t) die Parameter a, h/k (bzw. L × h/k), η' des Modells abzuschätzen, so können damit insbesondere für die Materialparameter $\alpha$ und k jedoch erstaunlich genaue Werte ermittelt werden, und zwar vorteilhaft insbesondere auch dann, wenn bei der Probenuntersuchung an den Probenoberflächen 16, 24 "relativ niedrige Wärmeverluste" an die Umgebung stattfinden.

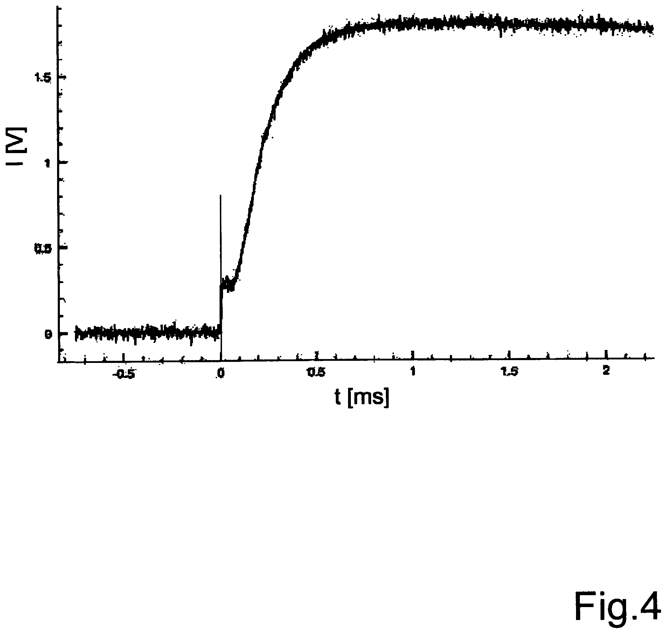

Fig. 4 zeigt beispielhaft, für eine unter Vakuum untersuchte transparente Probe P, den zeitlichen Verlauf eines für eine Intensität der Wärmestrahlung 26 bzw. den zeitlichen Verlauf der Temperatur T(L,t) an der Rückseite 24 der Probe P repräsentativen Signals I.

Aufgrund relativ niedriger Wärmeverluste an den Probenoberflächen unterscheidet sich der Verlauf gemäß Fig. 4 von dem Verlauf gemäß Fig. 3 dadurch, dass am Ende dieses Verlaufes kein ausgeprägtes Maximum durchlaufen wird. Insbesondere in einem derartigen Fall zeigt sich die Stärke des neuartigen Modells gemäß der Erfindung, welches auch dann die Ermittlung relativ genauer Werte der Materialparameter $\alpha$ und k erlaubt.

**Patentansprüche**

1. Verfahren zur photothermischen Untersuchung einer Probe (P), umfassend die Schritte:

   a) Bestrahlen einer ersten Seite (16) der Probe (P) mit einem elektromagnetischen Anregungspuls (18),
   b) Erfassen einer infolge des Anregungspulses (18) von einer der ersten Seite (16) gegenüberliegenden zweiten Seite (24) der Probe (P) abgegebenen Wärmestrahlung (26),
   c) Auswerten der erfassten Wärmestrahlung (26) basierend auf einem durch folgende Gleichungen definierten Modell:

$$\partial^2 T/\partial x^2 = 1/\alpha \times \partial T/\partial t \qquad \text{für } 0<x<L, \, t>0$$

$$k \times \partial T/\partial x - h \times T = -E(t) + \eta' \times (T(0,t) - T(L,t)) \quad \text{für } x=0, \, t>0$$

$$k \times \partial T/\partial x + h \times T = -\eta' \times (T(0,t) - T(L,t)) \qquad \text{für } x=L, \, t>0$$

$$T(x,0) = 0 \qquad \text{für } t=0$$

   wobei bezeichnen:

   T die orts- und zeitabhängige Temperatur der Probe,
   L die Dicke der Probe,
   x die in Dickenrichtung der Probe betrachtete Ortskoordinate, mit x=0 an der ersten Seite der Probe und x=L an der zweiten Seite der Probe,
   t die Zeit, mit t=0 zum Zeitpunkt des Anregungspulses,
   E(t) die zeitabhängige Strahlungsstromdichte des Anregungspulses,
   $\alpha$ die Temperaturleitfähigkeit der Probe,
   k die Wärmeleitfähigkeit der Probe,
   h den Wärmetransferkoeffizienten an den Probenoberflächen,
   η' einen "Pauschal-Transparenzfaktor",

   wobei eine mathematische Ausgleichsrechnung durchgeführt wird, bei der anhand eines aus der erfassten Wärmestrahlung (26) ermittelten zeitlichen Verlaufes der Temperatur T(L,t) an der zweiten Seite (24) der Probe (P) der Parameter η' sowie einer oder mehrere der Parameter a, k, h und/oder daraus abgeleitete Parameter des Modells abgeschätzt werden.

2. Verfahren nach Anspruch 1, wobei der Anregungspuls (18) mittels einer gepulst betriebenen Blitzlampe (14) oder eines gepulst betriebenen Lasers erzeugt wird.

3. Verfahren nach einem der vorangehenden Ansprüche, wobei der Anregungspuls (18) mit einem Wellenlängenbereich von 100 nm bis 5 μm erzeugt wird.

4. Verfahren nach einem der vorangehenden Ansprüche, wobei während des Bestrahlens der ersten Seite mit dem Anregungspuls (18) und des Erfassens der von der zweiten Seite (24) der Probe (P) abgegebenen Wärmestrahlung die Probe in einer evakuierten Umgebung (36) angeordnet ist.

5. Verfahren nach einem der vorangehenden Ansprüche, wobei das Erfassen der abgegebenen Wärmestrahlung (26) mittels eines Infrarotdetektors erfolgt.

6. Verfahren nach einem der vorangehenden Ansprüche, wobei die Probe (P) an wenigstens einer Stelle im Wellenlängenintervall von 2 μm bis 6 μm einen Transmissionskoeffizienten von mindestens 0,3, insbesondere mindestens 0,4 besitzt.

7. Verfahren nach einem der vorangehenden Ansprüche, wobei die Probe (P) aus einem Glasmaterial besteht.

8. Vorrichtung (10) zur photothermischen Untersuchung einer Probe (P), umfassend:

   - eine Anregungsquelle (14, 20, 22) zum Bestrahlen einer ersten Seite (16) der Probe (P) mit einem elektromagnetischen Anregungspuls (18),
   - einen Detektor (28) zum Erfassen einer infolge des Anregungspulses (18) von einer der ersten Seite (16) gegenüberliegenden zweiten Seite (24) der Probe (P) abgegebenen Wärmestrahlung (26),
   - eine Auswerteeinrichtung (ST), die dazu ausgebildet ist, ein Auswerten der erfassten Wärmestrahlung (26) basierend auf einem durch folgende Gleichungen definierten Modell durchzuführen:

   $$\partial^2 T/\partial x^2 = 1/\alpha \times \partial T/\partial t \qquad \text{für } 0<x<L,\ t>0$$

   $$k \times \partial T/\partial x - h\times T = -\mathrm{E}(t) + \eta' \times (\mathrm{T}(0,t) - \mathrm{T}(L,t)) \quad \text{für } x=0,\ t>0$$

   $$k \times \partial T/\partial x + h\times T = -\eta' \times (\mathrm{T}(0,t) - \mathrm{T}(L,t)) \qquad \text{für } x=L,\ t>0$$

   $$T(x,0) = 0 \qquad \text{für } t=0$$

   wobei bezeichnen:

   T die orts- und zeitabhängige Temperatur der Probe,
   L die Dicke der Probe,
   x die in Dickenrichtung der Probe betrachtete Ortskoordinate, mit x=0 an der ersten Seite der Probe und x=L an der zweiten Seite der Probe,
   t die Zeit, mit t=0 zum Zeitpunkt des Anregungspulses,
   E(t) die zeitabhängige Strahlungsstromdichte des Anregungspulses,
   $\alpha$ die Temperaturleitfähigkeit der Probe,
   k die Wärmeleitfähigkeit der Probe,
   h den Wärmetransferkoeffizienten an den Probenoberflächen,
   $\eta'$ einen "Pauschal-Transparenzfaktor",

   wobei mittels der Auswerteeinrichtung (ST) eine mathematische Ausgleichsrechnung durchgeführt wird, bei der anhand eines aus der erfassten Wärmestrahlung (26) ermittelten zeitlichen Verlaufes der Temperatur (T(L,t)) an der zweiten Seite (24) der Probe (P) der Parameter n' sowie einer oder mehrere der Parameter a, k, h und/oder daraus abgeleitete Parameter des Modells abgeschätzt werden.

9. Vorrichtung (10) nach Anspruch 8, ferner umfassend eine temperierbare Probenkammer (36) mit einem darin untergebrachten Probenhalter (12) zur Anordnung und Temperierung der Probe (P).

10. Vorrichtung (10) nach Anspruch 8 oder 9, ferner umfassend eine verstellbare Anregungsoptik (22) zur Einstellung eines gewünschten Bestrahlunsspots auf der ersten Seite (16) der Probe (P) und/oder eine verstellbare Erfassungsoptik (34) zur Einstellung eines gewünschten Sichtfeldes des Detektors (28) auf der zweiten Seite (24) der Probe (P).

**Claims**

1. A method for the photothermal investigation of a sample (P), comprising the steps:

   a) irradiation of a first side (16) of the sample (P) with an electromagnetic excitation pulse (18),
   b) detection of thermal radiation (26) emitted from a second side (24) of the sample (P) lying opposite the first side (16) as a result of the excitation pulse (18),
   c) evaluation of the detected thermal radiation (26) based on a model defined by the following equations:

$$\partial^2 T/\partial x^2 = 1/\alpha \; x \; \partial T/\partial t \qquad\qquad \text{for } 0<x<L, \; t>0$$

$$k \; x \; \partial T/\partial x - hxT = -E(t) + \eta' \; x \; (T(0,t) - T(L,t)) \quad \text{for } x=0, \; t>0$$

$$k \; x \; \partial T/\partial x + hxT = -\eta' \; x \; (T(0,t) - T(L,t)) \qquad \text{for } x=0, \; t>0$$

$$T(x,0) = 0 \qquad\qquad\qquad \text{for } t=0$$

   wherein:

   T denotes the location- and time-dependent temperature of the sample,
   L denotes the thickness of the sample,
   x denotes the location coordinate viewed in the thickness direction of the sample, with x=0 at the first side of the sample and x=L at the second side of the sample,
   t denotes the time, with t=0 at the time of the excitation pulse,
   E(t) denotes the time-dependent radiation current density of the excitation pulse,
   $\alpha$ denotes the temperature conductivity of the sample,
   k denotes the thermal conductivity of the sample,
   h denotes the heat transfer coefficients at the sample surfaces,
   $\eta'$ denotes an "overall transparency factor",

   wherein a mathematical compensation calculation is carried out, in which the parameter $\eta'$ and one or more of the parameters $\alpha$, k, h and/or parameters of the model derived therefrom are estimated on the basis of a course over time of the temperature T(L,t) at the second side (24) of the sample (P) determined from the detected thermal radiation (26).

2. The method according to claim 1, wherein the excitation pulse (18) is generated by means of a flash lamp (14) operated in pulsed mode or a laser operated in pulsed mode.

3. The method according to any one of the preceding claims, wherein the excitation pulse (18) is generated with a wavelength range from 100 nm to 5 $\mu$m.

4. The method according to any one of the preceding claims, wherein the sample is arranged in an evacuated environment (36) during the irradiation of the first side with the excitation pulse (18) and the detection of the thermal radiation emitted by the second side (24) of the sample (P).

5. The method according to any one of the preceding claims, wherein the detection of the emitted thermal radiation (26) takes place by means of an infrared detector.

6. The method according to any one of the preceding claims, wherein the sample (P) has a transmission coefficient of at least 0.3, in particular at least 0.4, at at least one point in the wavelength range from 2 $\mu$m to 6 $\mu$m.

7. The method according to any one of the preceding claims, wherein the sample (P) is made of a glass material.

8. A device (10) for the photothermal investigation of a sample (P), comprising:

- an excitation source (14, 20, 22) for the irradiation of a first side (16) of the sample (P) with an electromagnetic excitation pulse (18),
- a detector (28) for detecting thermal radiation (26) emitted from a second side (24) of the sample (P) lying opposite the first side (16) as a result of the excitation pulse (18),
- an evaluation device (ST), which is configured to carry out an evaluation of the detected thermal radiation (26) based on a model defined by the following equations:

$$\partial^2 T/\partial x^2 = 1/\alpha \; x \; \partial T/\partial t \qquad \text{for } 0<x<L, \; t>0$$

$$k \; x \; \partial T/\partial x - hxT = -E(t) + \eta' \; x \; (T(0,t)-T(L,t) \quad \text{for } x=0, \; t>0$$

$$k \; x \; \partial T/\partial x + hxT = -\eta' \; x \; (T(0,t)-T(L,t) \qquad \text{for } x=0, \; t>0$$

$$T(x,0) = 0 \qquad \text{for } t=0$$

wherein:

T denotes the location- and time-dependent temperature of the sample,
L denotes the thickness of the sample,
x denotes the location coordinate viewed in the thickness direction of the sample, with x=0 at the first side of the sample and x=L at the second side of the sample,
t denotes the time, with t=0 at the time of the excitation pulse,
E(t) denotes the time-dependent radiation current density of the excitation pulse,
$\alpha$ denotes the temperature conductivity of the sample,
k denotes the thermal conductivity of the sample,
h denotes the heat transfer coefficients at the sample surfaces,
$\eta'$ denotes an "overall transparency factor",

wherein a mathematical compensation calculation is carried out, in which the parameter $\eta'$ and one or more of the parameters $\alpha$, k, h and/or parameters of the model derived therefrom are estimated on the basis of a course over time of the temperature (T(L,t)) at the second side (24) of the sample (P) determined from the detected thermal radiation (26) .

9. The device (10) according to claim 8, further comprising a heat-controlled sample chamber (36) with a sample holder (12) housed therein for the arrangement and temperature control of the sample (P).

10. The device (10) according to claim 8 or 9, further comprising an adjustable excitation lens system (22) for adjusting a desired irradiation spot on the first side (16) of the sample (P) and/or an adjustable detection lens system (34) for adjusting a desired field of vision of the detector (28) on the second side (24) of the sample (P).

**Revendications**

1. Procédé, destiné à l'analyse photothermique d'un échantillon (P), comprenant les étapes consistant à :

   a) irradier un premier côté de (16) de l'échantillon (P) avec une impulsion d'excitation (18) électromagnétique,
   b) détecter un rayonnement thermique (26) restitué suite à l'impulsion d'excitation (18) à partir d'un deuxième côté (24) de l'échantillon (P) opposé au premier côté (16),
   c) évaluer le rayonnement thermique (26) restitué sur la base d'un modèle défini pour les équations suivantes :

   $$\partial^2 T/\partial x^2 = 1/\alpha \ x \ \partial T/\partial t \qquad\qquad \text{pour } 0<x<L,\ t>0$$

   $$k \ x \ \partial T/\partial x - hxT = -E(t) + \eta' \ x \ (T(0,t) - T(L,t)) \ \text{pour } x=0,\ t>0$$

   $$k \ x \ \partial T/\partial x + hxT = -\eta' \ x \ (T(0,t) - T(L,t)) \qquad \text{pour } x=0,\ t>0$$

   $$T(x,0) = 0 \qquad\qquad\qquad \text{pour } t=0$$

   avec les significations :

   T pour la température de l'échantillon en fonction du temps et du lieu,
   L pour l'épaisseur de l'échantillon,
   x pour la coordonnée spatiale considérée dans le sens de l'épaisseur de l'échantillon, avec x=0 sur le premier côté de l'échantillon et x=L sur le deuxième côté de l'échantillon,
   t pour le temps, avec t=0 au moment de l'impulsion d'excitation,
   E(t) la densité du flux de rayonnement de l'impulsion d'excitation, en fonction du temps
   $\alpha$ la conductibilité de température de l'échantillon,
   k la conductibilité thermique de l'échantillon,
   h les coefficients de transfert thermique sur les surfaces de l'échantillon,
   $\eta'$ un « facteur de transparence forfaitaire »

   sachant qu'on procède à un calcul mathématique de compensation, lors duquel on estime à l'aide d'une courbe temporelle de la température déterminée à partir du rayonnement thermique (26) détecté sur le deuxième côté (24) de l'échantillon (P) le paramètre $\eta'$ ainsi qu'un ou plusieurs des paramètres $\alpha$, k, h et/ou des paramètres qui sont dérivés de ces derniers.

2. Procédé selon la revendication 1, l'impulsion d'excitation (18) étant générée au moyen d'un flash (14) à fonctionnement pulsé ou d'un laser à fonctionnement pulsé.

3. Procédé selon l'une quelconque des revendications précédentes, l'impulsion d'excitation (18) étant générée dans une gamme de longueurs d'onde de 100 nm à 5 $\mu$m.

4. Procédé selon l'une quelconque des revendications précédentes, pendant l'irradiation du premier côté avec l'impulsion d'excitation (18) et la détection du rayonnement thermique restitué par le deuxième côté (24) de l'échantillon (P), l'échantillon étant placé dans un environnement évacué (36).

5. Procédé selon l'une quelconque des revendications précédentes, la détection du rayonnement thermique (26) restitué s'effectuant au moyen d'un détecteur infrarouge.

6. Procédé selon l'une quelconque des revendications précédentes, l'échantillon (P) possédant sur au moins un endroit dans l'intervalle de longueur d'onde de 2 $\mu$m à 6 $\mu$m un coefficient de transmission d'au moins 0,3, notamment d'au moins 0,4.

7. Procédé selon l'une quelconque des revendications précédentes, l'échantillon (P) étant constitué d'une matière vitreuse.

**8.** Dispositif (10), destiné à l'analyse photothermique d'un échantillon (P), comprenant :

   - une source d'excitation (14, 20, 22) destinée à irradier un premier côté (16) de l'échantillon (P) avec une impulsion d'excitation (18) électromagnétique,
   - un détecteur (28), destiné à détecter un rayonnement thermique (26) restitué suite à l'impulsion d'excitation (18) par un deuxième côté (24) de l'échantillon (P) opposé au premier côté (16),
   - un dispositif d'évaluation (ST), qui est conçu pour procéder à une évaluation du rayonnement thermique (26) sur la base d'un modèle défini par les équations suivantes :

$$\partial^2 T/\partial x^2 = 1/\alpha \ x \ \partial T/\partial t \qquad \text{pour } 0<x<L, \ t>0$$

$$k \ x \ \partial T/\partial x - hxT = -E(t) + \eta' \ x \ (T(0,t)-T(L,t) \quad \text{pour } x=0, \ t>0$$

$$k \ x \ \partial T/\partial x + hxT = -\eta' \ x \ (T(0,t)-T(L,t) \qquad \text{pour } x=0, \ t>0$$

$$T(x,0) = 0 \qquad\qquad \text{pour } t=0$$

avec les significations :

   T pour la température de l'échantillon en fonction du temps et du lieu,
   L pour l'épaisseur de l'échantillon,
   x pour la coordonnée spatiale considérée dans le sens de l'épaisseur de l'échantillon, avec x=0 sur le premier côté de l'échantillon et x=L sur le deuxième côté de l'échantillon,
   t pour le temps, avec t=0 au moment de l'impulsion d'excitation,
   E(t) la densité du flux de rayonnement de l'impulsion d'excitation, en fonction du temps
   $\alpha$ la conductibilité de température de l'échantillon,
   k la conductibilité thermique de l'échantillon,
   h les coefficients de transfert thermique sur les surfaces de l'échantillon,
   $\eta'$ un « facteur de transparence forfaitaire »

sachant qu'au moyen du dispositif d'évaluation (ST), on procède à un calcul mathématique de compensation, lors duquel on estime à l'aide d'une courbe temporelle de la température déterminée (T(L,t)) à partir du rayonnement thermique (26) détecté sur le deuxième côté (24) de l'échantillon (P) le paramètre $\eta'$ ainsi qu'un ou plusieurs des paramètres $\alpha$, k, h et/ou des paramètres qui sont dérivés de ces derniers.

**9.** Dispositif (10) selon la revendication 8, comprenant par ailleurs une chambre à échantillons (36) tempérable, avec un porte-échantillon (12) logé dans cette dernière, pour y placer et y tempérer l'échantillon (P).

**10.** Dispositif (10) selon la revendication 8 ou 9, comprenant par ailleurs une optique d'excitation (22) ajustable, destinée à régler un spot d'irradiation souhaité sur le premier côté (16) de l'échantillon (P) et/ou une optique de détection (34) ajustable, destinée à régler un champ de vision souhaité du détecteur (28) sur le deuxième côté (24) de l'échantillon (P).

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. MEHLING et al.** Thermal Diffusivity of Semitransparent Materials Determined by the Laser-Flash Method Applying a New Analytical Model. *International Journal of Thermophysics,* 1998